# EUROPEAN PATENT SPECIFICATION

(11) **EP 3 323 281 B1**
(45) Date of publication and mention of the grant of the patent: **15.04.2020**
(21) Application number: 17382777.5
(22) Date of filing: 15.11.2017
(51) Int. Cl.: A01B 61/04

(54) **DAMPING DEVICE FOR FARM IMPLEMENTS**
DÄMPFUNGSVORRICHTUNG FÜR LANDWIRTSCHAFTMACHINEN
DISPOSITIF D'AMORTISSEMENT POUR OUTILS AGRICOLES

(30) Priority: 16.11.2016 ES 201631465
(43) Date of publication of application: 23.05.2018
(73) Proprietor: Goicoechandía Azqueta, Jose Luis, 31191 Barbatain (ES)
(72) Inventor: Goicoechandía Azqueta, Jose Luis, 31191 Barbatain (ES)
(74) Representative: Carpintero Lopez, Francisco

(56) References cited:
- WO-A1-2014/031067
- FR-A1- 2 882 216
- US-A1- 2013 269 960

## Description

### OBJECT OF THE INVENTION

The present invention relates to a new damping device for farm implements, for example chisel ploughs, fast disc harrows and ploughs, susceptible of being mounted on any implement that includes another alternative damping system.

### BACKGROUND OF THE INVENTION

Agricultural machines (implements) are usually classified based on their function: fertilisers, harvesters, brushcutters, motorised ploughs, crushers, chisel ploughs, disc harrows, fast disc harrows, loaders, etc.

Some of these implements comprise a chassis and one or more arms to which the elements that come into contact with the ground are fixed (blades, ploughs, etc.), and which in many cases need damping between the chassis and the arm(s) to regulate the impact of the work in the field.

There are different types of damping: hydraulic, spring, leaf spring and the most modern, using elastomers or rubbers. The latter is used manufacturing a metal structure that envelopes the chassis of the tool and placing a cylindrical rubber in the interior on each side to achieve vertical and lateral damping.

However, the embodiments currently available on the market are prone to breakage in certain points, due to material fatigue and to the distance of said breakage points from the anchoring points. Also, in the case of spring damping, various studies have revealed that the breaking load of the springs is much higher than that of the arms, due to which the elasticity of the springs cannot be leveraged because of that great difference, since the arms fold or stretch before leveraging the total compression capacity of the spring, implying an underutilisation of the spring, which additionally does not fulfil its damping function on the arm of the tool satisfactorily. Additionally, the springs must be protected and guided, which raises the cost.

If we analyse damping devices with rubbers, we can observe that they are assembled by disposing the rubbers on each side of the chassis, i.e. top, bottom, front and back, and fixing them to the chassis by means of a screwed structure that forms an angle of 45° to the chassis. It is a system that works perfectly in the case of fast disc harrows or shallow working depths, since when the machine is working and the arm encounters an obstacle in its path it acts as a lever and the entire body that envelopes the chassis rotates around it and frees the arm of the obstacle; the problem is that, taking into account that the support
forms an angle of 45° with the chassis, when it rotates more than 22° 30" the rubber literally moves to the other side. That is, the bottom rubber moves to the back, the back rubber moves to the top and so on, and the machine is left spun round and rendered useless, due to which the conventional rubber system can be used far shallow working depths but not deep working depths.

In the case of deep working depths, the movement of the rubber must be blocked, with the cost and drawbacks entailed.

Wo 2014/031067 A1 discloses a suspension unit for an agricultural implement having a damping device for farm implements. The damping device comprises a chassis and one or more arms bearing elements that come into contact with the ground. FR 2 882 216 A1 and US 2013/269960 A1 also disclose suspension units for agricultural implements.

### DESCRIPTION OF THE INVENTION

The device of the invention applies to tools of the type comprising a chassis and one or more arms bearing the elements that come into contact with the ground. It has a configuration that minimises material fatigue in accordance with the distance from the anchoring points of current solutions. It also has a simple configuration which enables the use of economical damping elements (elastomers) and the optimisation of their use to protect the arms of the tools.

In accordance with the invention, the device comprises a damping device as claimed in claim 1.

The damping device comprises:
- a head, which is fixed to the chassis of the implement,
- a tilting element, which is fixed to said head by means of an articulation with a horizontal axis transversal to the direction of travel (e.g.: a screw or bolt), wherein said articulation enables the tilting element to swing up and down, and
- an elastic element disposed between the head and the tilting element, and which enables the damping and recovery of its initial shape with good capacity to recover after deformation, resistance to temperature, constant deformation in accordance with the pressure applied and a long useful life, said properties being optimally fulfilled by rubber.

Therefore, for example, in comparison to spring damping, we eliminate the spring, the protective tube, the upper limit, the lower limit, the spring lid, the nylon lid, the pressure regulator screw, one of the bolts, etc. -in addition to the fact that most of the springs are oversized for the work they perform-, with the corresponding simplicity of the device, while in comparison with other elastomer-based systems we have the advantages that our system has greater clearance capacity, which makes it possible to work with guarantees when the tool encounters an obstacle in its path that requires greater clearance capacity and which cannot be achieved with a standard four-elastomer assembly.

In short, the simplicity of the device is maximum, since it does not imply a change in the manner of working with springs or leaf springs, but rather simplifies both embodiments taking them to their minimum expression, such that it is only necessary to create the moulds for casting the head and the mobile part, and the entire damping system is reduced to four parts, with the ensuing simplicity, considerable reduction in costs and maintenance. Additionally, by shaping these parts such that the elastic element remains as close as possible to the articulation, the clearance or capacity to escape of the arm is increasingly greater, minimising the number of arms which, upon encountering an obstacle, are stretched or break due to not having sufficient clearance capacity to avoid it.

The choice of the material of the elastic element was made by determining the optimum compression and recovery values and, subsequently, testing rubbers with different compositions that adapt to the desired values, taking into account the working temperature, the hardness of the rubber with the adequate shores and the rubber's capacity to recover in accordance with the pressure applied.

### BRIEF DESCRIPTION OF THE DRAWINGS

Figure 1 shows two side views of an implement that incorporates the device of the invention in different working positions, actuating the damping.
Figure 2 shows three views: side, top and rear of the head of the device of the invention.
Figure 3 shows two views: side and bottom of the tilting element of the device of the invention.
Figure 4 shows a bottom view of the device of the invention.

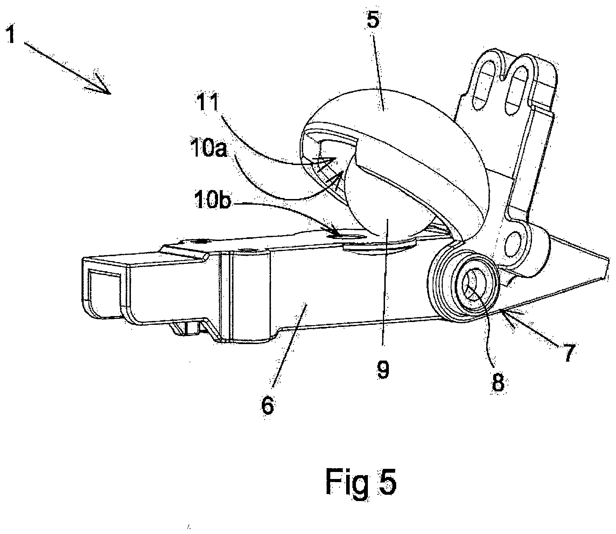

Figure 5 shows a perspective view of the device of the invention.

### DESCRIPTION OF A PRACTICAL EMBODIMENT OF THE INVENTION

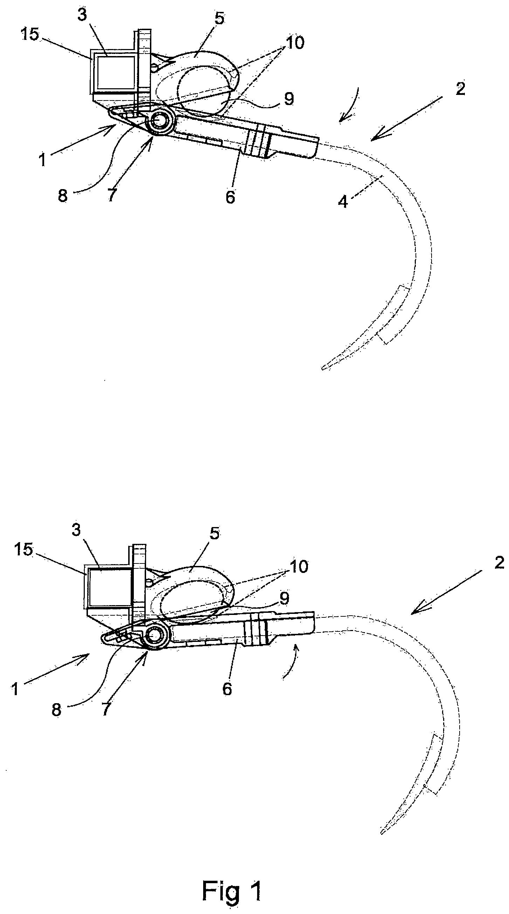

The damping device (1) for farm implements (2) of the invention (see fig. 1) applies to implements (2) comprising a chassis (3) and one or more arms (4) bearing elements that come into contact with the ground and, in accordance with the invention, comprises:
- a head (5), which is fixed to the chassis (3) of the implement (2),
- a tilting element (6), which is fixed to said head (5) by means of an articulation (7) with a transverse horizontal axis, said articulation (7) allowing the tilting element (6) to swing up and down, and
- an elastic element (9) disposed between the head (5) and the tilting element (6), made of material with good capacity to recover after deformation, resistant to temperature, constant deformation in accordance with the pressure applied and a long useful life.

The elastic element (9) may have a spherical shape due to its geometry and capacity to work on a constant basis. Additionally, the elastic element (9) is ideally materialised in rubber, due to the fact that it includes the desired properties and is economical to achieve.

Furthermore, the articulation (7) with a transverse horizontal axis ideally comprises a bolt (8) and/or screw, since we are materialising the axis thereof with a single element.

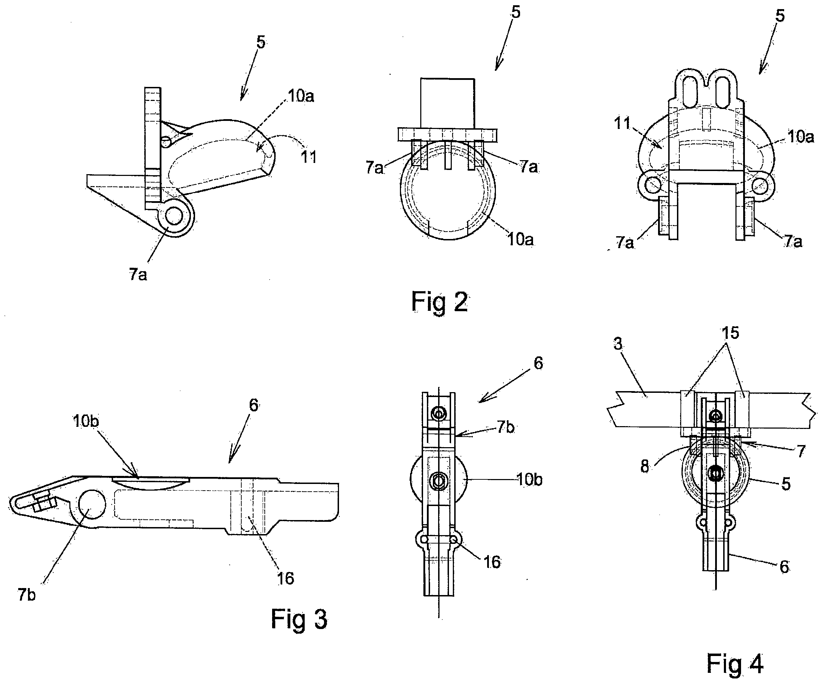

The elastic element (9) is preferably housed in a cradle (10) configured in the head (5) and in the tilting element (6); wherein the head (5) comprises a first semi-cradle (10a) on its rear 30 part (see fig. 2), and the tilting element (6) comprises a second semi-cradle (10b) supplementing the first semi-cradle (10a), understanding cradle to be a receptacle capable of housing and retaining the elastic element (9) during the operation of the device (1) and understanding supplementary form to be that both semi-cradles (10a, 10b) come into contact with the elastic element (9) during the operation of the device (1). The first semi-cradle (10a)
or the second semi-cradle (10b) -in the example the first has been shown- comprise an expansion gap (11) (with dimensions equal to or greater than the largest size that can be adopted by the elastic element (9) in the position of greatest travel of the tilting element, without breakage, even lacking lateral closures). In this case the first semi-cradle (10a) contains the expansion gap (11). The second semi-cradle (10b) is configured by a bowl disposed at the top of the tilting element (6) and directed towards the first semi-cradle (10a). Therefore, in the preferred configuration the tilting element (6) has two functions: on the one hand, it supports the arm (4) of the tool (2) and, on the other, on its upper part it comprises the second semi-cradle (10b) supplementing the first semi-cradle (10a).

In the preferred embodiment, the head (5) comprises a first semi-articulation (7a) on its lower part for the passage of the bolt (8) or pin that configures the articulation (7), while the tilting element (6) comprises a second end semi-articulation (7b). The optional inclusion of friction-resistant bushings (not represented), for example made of nylon, inserted in the articulation (7) has also been envisaged.

Furthermore, the head (5) comprises fixations to the chassis, which in the example shown in the figures (see fig. 1) are struts (15) and/or could also be or comprise welds and/or screws.

Lastly, it should be noted that the tilting element (6) may comprise the arm (4) of the tool (2) in single-piece configuration, or may comprise a detachable coupling (16) for interchangeably fixing the arm (4) of the tool (2) in case of breakage or change of use, using any commercial arm, positioning a chisel arm, semi-chisel arm, a seeder arm, a ploughing arm, etc., increasing the functionality of the system.

Having sufficiently described the nature of the invention and the manner in which to embody it in practice, it should be noted that the foregoing provisions indicated and represented in the attached drawings are susceptible to changes in detail that do not alter the main principle.

## Claims

1. A damping device (1) for farm implements (2), of the type of implements (2) that comprise a chassis (3) and one or more arms (4) bearing elements that come into contact with the ground, the damping device (1) comprises:
- a head (5), which is fixed to the chassis (3) of the implement (2),
- a tilting element (6) supporting one arm (4), the tilting element (6) being fixed to said head (5) by means of an articulation (7), the articulation (7) having a horizontal axis transversal to a direction of travel, wherein said articulation (7) enables the tilting element (6) to swing up and down, and
- an elastic element (9) disposed between the head (5) and the tilting element (6),
wherein said elastic element (9) has a spherical shape,
**characterized in that:**
the elastic element (9) is disposed housed in a cradle (10) configured in the head (5) and in the tilting element (6),
wherein the head (5) comprises a first semi-cradle (10a) on its rear part and the tilting element (6) comprises a second semi-cradle (10b) supplementing the first semi-cradle (10a),
wherein the first semi-cradle (10a) or the second semi-cradle (10b) comprise an expansion gap (11).

2. The damping device (1) for farm implements (2), according to claim 1, **characterised in that** the elastic element (9) is made of rubber.

3. The damping device (1) for farm implements (2), according to any of the preceding claims, **characterised in that** the articulation (7) with a transverse horizontal axis comprises a bolt (8) and/or a screw.

4. The damping device (1) for farm implements (2), according to claim 1, **characterised in that** the first semi-cradle (10a) contains the expansion gap (11) and the second semi-cradle (10b) is configured by a bowl disposed at the top of the tilting element (6) and directed towards the first semi-cradle (10a).

5. The damping device (1) for farm implements (2), according to any of the preceding claims, **characterised in that** the head (5) comprises a first semi-articulation (7a) on its lower part for the passage of the bolt (8) or pin that configures the articulation (7), while the tilting element (6) comprises a second end semi-articulation (7b).

6. The damping device (1) for farm implements (2), according to any of the preceding claims, **characterised in that** it comprises friction-resistant bushings inserted in the articulation (7).

7. The damping device (1) for farm implements (2), according to any of the preceding claims, **characterised in that** the head (5) comprises fixations to the chassis selected between welds and/or struts (15) and/or screws.

8. The damping device (1) for farm implements (2), according to any of the preceding claims, **characterised in that** the tilting element (6) comprises the arm (4) of the tool (2) in single- piece configuration.

9. The damping device (1) for farm implements (2), according to any of claims 1 to 8, **characterised in that** the tilting element (6) comprises a detachable element (16) for interchangeably fixing the arm (4) to the implement (2).

## Patentansprüche

1. Dämpfvorrichtung (11) für landwirtschaftliche Geräte (2) des Typs von Geräten (3), die ein Fahrwerk (3) und einen oder mehrere Arme (4), die Elemente tragen, die mit dem Boden in Kontakt kommen, aufweisen, wobei die Dämpfvorrichtung (1) Folgendes umfasst:
- einen Kopf (5), der an dem Fahrwerk (3) des Geräts (2) befestigt ist;
- ein Kippelement (6), das einen Arm (4) stützt, wobei das Kippelement (6) mittels eines Gelenks (7) an dem Kopf (5) befestigt ist, wobei das Gelenk (7) eine horizontale Achse aufweist, die quer zu einer Fahrtrichtung ist, wobei das Gelenk (7) dem Kippelement (6) ermöglicht, nach oben und unten zu schwingen, und
- ein elastisches Element (9), das zwischen dem Kopf (5) und dem Kippelement (6) angeordnet ist, wobei das elastische Element (9) eine kugelförmige Form aufweist,
**dadurch gekennzeichnet, dass:**
das elastische Element (9) in einer in dem Kopf (5) und in dem Kippelement (6) konfigurierten Schwenkwiege (10) untergebracht angeordnet ist,
wobei der Kopf (5) ein erste Halb-Schwenkwiege (10a) auf seinem hinteren Teil umfasst und das Kippelement (9) eine zweite Halb-Schwenkwiege (10b) umfasst, die die erste Halb-Schwenkwiege (10a) ergänzt,
wobei die erste Halb-Schwenkwiege (10a) oder die zweite Halb-Schwenkwiege (10b) einen Dehnungsspalt (11) umfassen.

2. Dämpfvorrichtung (11) für landwirtschaftliche Geräte (2) nach Anspruch 1, **dadurch gekennzeichnet, dass** das elastische Element (9) aus Gummi hergestellt ist.

3. Dämpfvorrichtung (11) für landwirtschaftliche Geräte (2) nach einem der vorstehenden Ansprüche, **dadurch gekennzeichnet, dass** das Gelenk (7) mit einer quer verlaufenden horizontalen Achse einen Bolzen (8) und/oder eine Schraube umfasst.

4. Dämpfvorrichtung (11) für landwirtschaftliche Geräte (2) nach Anspruch 1, **dadurch gekennzeichnet, dass** die erste Halb-Schwenkwiege (10a) den Dehnungsspalt (11) umfasst und die zweite Halb-Schwenkwiege (10b) durch eine Schale konfiguriert ist, die an der Spitze des Kippelements (6) angeordnet ist und zu der ersten Halb-Schwenkwiege (10a) gerichtet ist.

5. Dämpfvorrichtung (11) für landwirtschaftliche Geräte (2) nach einem der vorstehenden Ansprüche, **dadurch gekennzeichnet, dass** der Kopf (5) ein erstes Halbgelenk (7a) auf seinem unteren Teil für den Durchtritt des Bolzens (8) oder Stifts, der das Gelenk (7) konfiguriert, umfasst, während das Kippelement (6) ein zweites Halbgelenk (7b) umfasst.

6. Dämpfvorrichtung (11) für landwirtschaftliche Geräte (2) nach einem der vorstehenden Ansprüche, **dadurch gekennzeichnet, dass** sie in das Gelenk (7) eingesetzte reibungsbeständige Buchsen umfasst.

7. Dämpfvorrichtung (11) für landwirtschaftliche Geräte (2) nach einem der vorstehenden Ansprüche, **dadurch gekennzeichnet, dass** der Kopf (5) Befestigungen an dem Fahrwerk umfasst, die ausgewählt sind zwischen Schweißverbindungen und/oder Streben (15) und/oder Schrauben.

8. Dämpfvorrichtung (11) für landwirtschaftliche Geräte (2) nach einem der vorstehenden Ansprüche, **dadurch gekennzeichnet, dass** das Kippelement (6) den Arm (4) des Werkzeugs (2) in Einzelstückkonfiguration umfasst.

9. Dämpfvorrichtung (11) für landwirtschaftliche Geräte (2) nach einem der Ansprüche 1- 9, **dadurch gekennzeichnet, dass** das Kippelement (6) ein abnehmbares Element (16) zum austauschbaren Befestigen des Arms (4) an dem Gerät (2) umfasst.

## Revendications

1. Un dispositif d'amortissement (1) pour de l'outillage agricole (2), du type outillage (2) qui comprend un châssis (3) et un ou plusieurs bras (4) portant des éléments qui viennent au contact du sol, le dispositif d'amortissement (1) comprenant :
- une tête (5), laquelle est fixée au châssis (3) de l'outillage (2),
- un élément basculant (6) supportant un bras (4), l'élément basculant (6) étant fixé à ladite tête (5) au moyen d'une articulation (7), l'articulation (7) ayant un axe horizontal transversal à une direction de progression, ladite articulation (7) permettant à l'élément basculant (6) d'osciller vers le haut et vers le bas, et
- un élément élastique (9) disposé entre la tête (5) et l'élément basculant (6),
où ledit élément élastique (9) a une forme sphérique, **caractérisé en ce que :**
l'élément élastique (9) est disposé logé dans un berceau (10) configuré dans la tête (5) et dans l'élément basculant (6),
où la tête (5) comprend un premier semi-berceau (10a) sur sa partie arrière et l'élément basculant (6) comprend un deuxième semi-berceau (10b) complétant le premier semi-berceau (10a),
où le premier semi-berceau (10a) ou le deuxième semi-berceau (10b) comprennent un jeu de dilatation (11).

2. Le dispositif d'amortissement (1) pour de l'outillage agricole (2), selon la revendication 1, **caractérisé en ce que** l'élément élastique (9) est fait en caoutchouc.

3. Le dispositif d'amortissement (1) pour de l'outillage agricole (2), selon n'importe lesquelles des revendications précédentes, **caractérisé en ce que** l'articulation (7) présentant un axe horizontal transversal comprend un boulon (8) et/ou une vis.

4. Le dispositif d'amortissement (1) pour de l'outillage agricole (2), selon la revendication 1, **caractérisé en ce que** le premier semi-berceau (10a) contient le jeu de dilatation (11) et le deuxième semi-berceau (10b) est configuré par une cuvette disposée en haut de l'élément basculant (6) et dirigée vers le premier semi-berceau (10a).

5. Le dispositif d'amortissement (1) pour de l'outillage agricole (2), selon n'importe lesquelles des revendications précédentes, **caractérisé en ce que** la tête (5) comprend une première semi-articulation (7a) sur sa partie inférieure pour le passage du boulon (8) ou de la broche qui configure l'articulation (7), tandis que l'élément basculant (6) comprend une deuxième semi-articulation d'extrémité (7b).

6. Le dispositif d'amortissement (1) pour de l'outillage agricole (2), selon n'importe lesquelles des revendications précédentes, **caractérisé en ce qu'**il comprend des douilles résistant aux frottements insérées dans l'articulation (7).

7. Le dispositif d'amortissement (1) pour de l'outillage agricole (2), selon n'importe lesquelles des revendications précédentes, **caractérisé en ce que** la tête (5) comprend des fixations sur le châssis sélectionnées entre des soudures et/ou des montants (15) et/ou des vis.

8. Le dispositif d'amortissement (1) pour de l'outillage agricole (2), selon n'importe lesquelles des revendications précédentes, **caractérisé en ce que** l'élément basculant (6) comprend le bras (4) de l'outil (2) en configuration monopièce.

9. Le dispositif d'amortissement (1) pour de l'outillage agricole (2), selon n'importe lesquelles des revendications 1 à 8, **caractérisé en ce que** l'élément basculant (6) comprend un élément détachable (16) pour fixer de manière interchangeable le bras (4) à l'outillage (2).
